# EUROPÄISCHE PATENTANMELDUNG

(11) **EP 0 534 059 A1**
(43) Veröffentlichungstag der Anmeldung: **31.03.1993**
(21) Anmeldenummer: 92109505.5
(22) Anmeldetag: 05.06.1992
(51) Int. Cl.: G02F 1/1335

(54) **Flüssigkristall-Anzeigevorrichtung**

(30) Priorität: 26.09.1991 DE 4131993
(71) Anmelder: Licentia Patent-Verwaltungs-GmbH, D-60596 Frankfurt (DE)
(72) Erfinder: Schauer, Gernot, Dr.rer.nat. Dipl.-Phys., W-7920 Heidenheim (DE); Müscher, Herbert, Dipl.-Phys., W-7900 Ulm (DE)
(74) Vertreter: Weber, Gerhard, Dipl.-Phys.

(57) **Zusammenfassung**

Es wird vorgeschlagen, bei transmissiven Betrieb einer Flüssigkristall-Anzeigevorrichtung die Beleuchtung mittels einer in die Flüssigkristallzelle integrierten polymeren Elektrolumineszenzschicht vorzunehmen.

## Beschreibung

Die vorliegende Erfindung betrifft eine Flüssigkristall-Anzeigevorrichtung nach dem Oberbegriff des Patentanspruchs 1.
Es sind transmissive oder transflektive Flüssigkristall-Anzeigevorrichtungen bekannt, die von der Rückseite her mit großflächigen Leuchtquellen durchleuchtet werden. Als auf der Außenfläche der hinteren transparenten Deckplatte angebrachte Leuchtquelle sind z.B. auch Elektrolumineszenzfolien oder dergleichen bekannt, die zur Anregung verhältnismäßig hohe elektrische Spannungen benötigen und mit Strömen hoher Frequenzen betrieben werden.
Es sind auch schon elektrisch zum Leuchten anregbare polymere Schichten vorgeschlagen worden, die mit verhältnismäßig geringer elektrischen Spannungen, betrieben werden können (Electronic World News, 8. July 1991, S.22). Diese Spannungen können Gleichspannungen oder altermierende Spannungen geringer Frequenz sein.
Der vorliegenden Erfindung liegt die Aufgabe zugrunde, Flüssigkristall-Anzeigevorrichtungen der eingangs genannten Art anzugeben, die bei sehr flacher Bauweise mit integrierter Leuchtquelle herstellbar sind und zur Beleuchtung vergleichsweise geringe elektrische Leistung benötigen. Diese Aufgabe wird durch die im Kennzeichen des Patentanspruches angegebenen Merkmale gelöst.

Ein wesentlicher Vorteil einer Flüssigkristall-Anzeigevorrichtung mit polymerer Elektrolumineszenzschicht besteht darin, daß diese, die Beleuchtungsquelle bei transmissiver Betriebsweise bildende polymere Schicht, leicht in den Fertigungsablauf bei der Herstellung der Flüssigkristall-Anzeigevorrichtung integrierbar ist. Weitere Vorteile werden darin gesehen, daß die Leuchtquelle auch zwischen den Deckplatten in enger Nachbarschaft mit dem Flüssigkristall angeordnet werden kann und mit niedrigen Spannungen betrieben werden kann.

Eine solche polymere Schicht kann einfach strukturiert oder ganzflächig bzw. großflächig aufgebracht werden. Wird diese Leuchtschicht in der Flüssigkristallzelle angebracht, so können die einzelnen Ansteuerelektroden für die Flüssigkristallschicht gleichzeitig auch als Ansteuerelektroden für die Leuchtschicht verwendet werden, so daß die polymere Schicht nur an den Stellen zum Leuchten angeregt wird, die zum gleichen Zeitpunkt auch zur Steuerung der Flüssigkristallschicht angesteuert werden. Infolge der geringen Leistungsaufnahme ist aber auch eine dauernde Leuchtanregung der polymeren Schicht möglich.

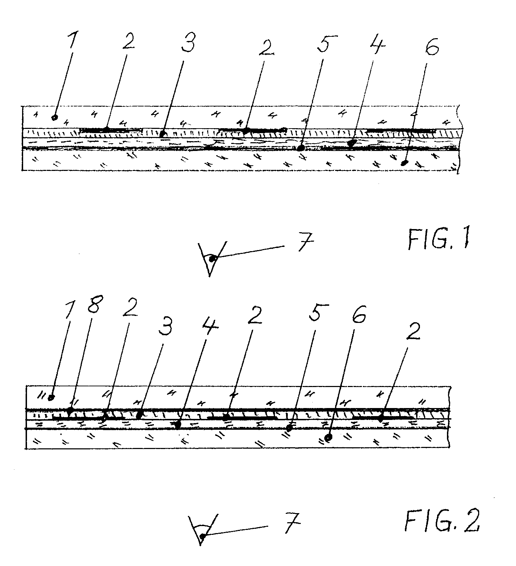

Anhand der in den Figuren 1 und 2 schematisch dargestellten Querschnitte durch erfindungsgemäße Flüssigkristall-Anzeigevorrichtungen wird die Erfindung nachfolgend näher erläutert.

Beide Figuren zeigen Ausführungsbeispiele mit in die Flüssigkristall-Anzeigevorrichtung integrierter Beleuchtungsquelle, wenngleich es auch vorteilhaft sein kann, die polymere Elektrolumineszenzschicht auf der Außenseite der hinteren Deckplatte anzuordnen, die in diesem Fall dann auch transparent sein muß.
In beiden Figuren bedeuten 1 die hintere, d.h. dem Betrachter 7 abgewandte Deckplatte, 6 die vordere transparente Deckplatte, 4 die Flüssigkristallschicht und 3 die polymere, elektrisch anregbare Lumineszenzschicht. Die Ansteuerung der Flüssigkristallschicht 4 erfolgt mittels einer auf der vorderen Deckplatte 6, die z.B. aus Glas besteht, angebrachten großflächigen, transparenten Elektrodenschicht 5, die z.B. eine sogenannte ITO-Schicht (Indium-tin-oxid) ist und mittels hinter der Flüssigkristallschicht 4 angebrachten einzeln ansteuerbarer Elektrodensegmenten 2.
Vom Betrachter 7 aus gesehen ist nun jeweils hinter der Flüssigkristallschicht 4 eine polymere Elektrolumineszenzschicht 3 vorgesehen, die bei elektrischer Anregung die Flüssigkristallschicht 4 von hinten durchleuchtet.

Bei dem in Figur 1 gezeigten Ausführungsbeispiel sind sowohl die polymere Leuchtschicht 3 als auch die Flüssigkristallschicht 4 zwischen der großflächigen Elektrode 5 auf der vorderen Deckplatte 6 einerseits und den Segementelektroden 2 auf der hinteren Deckplatte 1 andererseits angeordnet und zwar so, daß die polymere Leuchtschicht 3 vom Betrachter 7 aus gesehen, hinter der Flüssigkristallschicht 4 sich befindet.

Bei Beaufschlagung mit einer zwischen einer der Elektroden 2 und der Elektrode 5 angelegten elektrischen Ansteuerspannung wird in dem Ansteuerbereich sowohl die polymere Schicht 3 zum Leuchten angeregt als auch die Flüssigkristallschicht 4 angesteuert.

Bei dem in Figur 2 gezeigten Ausführungsbeispiel können die Flüssigkristallschicht 4 und die polymere Schicht 3 getrennt voneinander angesteuert werden. Durch Anlegen einer Spannung an eines der Elektrodensegmente 2 und an die Elektrode 8 auf der hinteren Deckplatte 1 wird an dieser Stelle die polymere Schicht 3 zum Leuchten angeregt. Wird auch zwischen der vorderen Elektrode 5 und einem Elektrodensegment 2 eine Spannung angelegt, so wird auch an dieser Stelle die Flüssigkristallschicht 4 angesteuert.

## Patentansprüche

1. Flüssigkristall-Anzeigevorrichtung mit einer zwischen zwei auf ihren Innenflächen mit Elektroden versehenen Deckplatten, von denen zumindest die dem Betrachter zugewandte Deckplatte durchsichtig ist, mit einer zwischen den Deckplatten angeordneten Flüssigkristallschicht und mit einer flächenartig ausgebildeten, hinter der Flüssigkristallschicht angeordneten Beleuchtungsanordnung, dadurch gekennzeichnet, daß die Beleuchtungsanordnung aus einer auf der hinteren Deckplatte (1) angeordneten elektrisch zur Lumineszenz anregbaren polymeren Schicht (3) besteht.

2. Flüssigkristall-Anzeigevorrichtung nach Anspruch 1, dadurch gekennzeichnet, daß die polymere Schicht (3) auf der Innenfläche der hinteren Deckplatte (1) angeordnet ist.

3. Flüssigkristall-Anzeigevorrichtung nach Anspruch 1 oder Anspruch 2, dadurch gekennzeichnet, daß die elektrolumineszierende polymere Schicht (3) in getrennt ansteuerbare Schichtteile aufgeteilt ist.

4. Flüssigkristall-Anzeigevorrichtung nach Anspruch 3, dadurch gekennzeichnet, daß die getrennt ansteuerbaren Schichtteile der elektorlumineszierenden polymeren Schicht (3) in ihrer Form in etwa der Form der Ansteuerelektroden (2) für die Flüssigkristallschicht (4) entsprechen.

5. Flüssigkristall-Anzeigevorrichtung nach einem der Ansprüche 1 bis 4, dadurch gekennzeichnet, daß die Ansteuerelektroden (2) für die Flüssigkristallschicht (4) gleichzeitig Ansteuerelektroden für die elektrolumineszierende polymere Schicht (3) sind.

6. Flüssigkristall-Anzeigevorrichtung nach einem der Ansprüche 1 bis 5, dadurch gekennzeichnet, daß die elektrisch zum Leuchten anregbare polymere Schicht (3) zumindest in Teilbereichen mehrere Anzeigeelemente überdeckend großflächig ausgebildet ist.

7. Flüssigkristall-Anzeigevorrichtung nach einem der Ansprüche 1 bis 6, dadurch gekennzeichnet, daß die elektrische Anregung hintereinanderliegender Schichtteile der polymeren Schicht (3) und der Flüssigkristallschicht (4) mittels einer zugeordneten Segmentelektrode (2) gleichzeitig erfolgt.

8. Flüssigkristall-Anzeigevorrichtung nach einem der Ansprüche 1 bis 7, dadurch gekennzeichnet, daß zwischen der hinteren Deckplatte (1) und der polymeren Elekrolumineszensschicht (3) zumindest eine transparente Elektrodenschicht (2, 8) angeordnet ist.
